# EUROPÄISCHE PATENTSCHRIFT

(11) **EP 0 411 652 B1**
(45) Veröffentlichungstag und Bekanntmachung des Hinweises auf die Patenterteilung: **26.01.1994**
(21) Anmeldenummer: 90114917.9
(22) Anmeldetag: 03.08.1990
(51) Int. Cl.: F16K 5/06

(54) **Schaltwellenabdichtung bei Armaturen**
Valve spindle sealing
Etanchéité pour tige de vanne

(30) Priorität: 04.08.1989 DE 3925888
(43) Veröffentlichungstag der Anmeldung: 06.02.1991
(73) Patentinhaber: CHEMAT GmbH Armaturen für Industrie- und Nuklearanlagen, D-77871 Renchen (DE)
(72) Erfinder: Kraft, Gerd, D-7523 Graben-Neudorf (DE); Neumann, Klaus-Dieter, D-7593 Renchen (DE)
(74) Vertreter: Betten & Resch

(56) Entgegenhaltungen:
- BE-A- 550 067
- DE-A- 2 700 609
- DE-B- 1 299 229
- FR-A- 1 469 220
- GB-A- 958 832

## Beschreibung

Die Erfindung betrifft eine Schaltwellenabdichtung bei Armaturen mit einem Armaturengehäuse und einer sich durch das Gehäuse hindurch erstreckenden Schaltwelle, die im Gehäuse drehbar gelagert ist und gegenüber dem Gehäuse abgedichtet ist, gemäß dem Oberbegriff des Anspruchs 1.

Armaturen werden in den meisten Fällen mit nachstellbaren Schaltwellenabdichtungen hergestellt.

Solche Armaturen lassen sich bei Undichtheit zwischen Schaltwelle und Gehäuse durch eine Stopfbuchsbrille oder Stopfbuchsmutter nachstellen, bis die Undichtheit behoben ist.

Um bei Produktionsanlagen insbesondere der chemischen Industrie mögliche Undichtigkeiten auf ein möglichst geringes Maß zu reduzieren, geht man dazu über, immer mehr wartungsfreie Schaltwellenabdichtungen zu verwenden.

Solche Armaturen nach dem Stand der Technik werden meistens durch einen O-Ring zwischen Gehäuse und Schaltwelle abgedichtet.

Bekanntlich haben O-Ringe den Nachteil, daß sie sich bei gleichbleibendem Einbauraum plastisch verformen, so daß die Vorspannung immer kleiner wird und dies führt zu schneller Undichtheit.

Bei Armaturen, die eine hohe Schaltzahl von Auf und Zu bewältigen, ist auch ein hoher Abrieb am O-Ring zu verzeichnen.

Aus der GB-A-958 832 ist eine Schaltwellenabdichtung gemäß dem Oberbegriff des Anspruchs 1 bekannt, bei der als einzige Abdichtung zwischen Gehäuse und Schaltwelle das zwischen gehäuseseitiger Dichtfläche und schaltwellenseitiger Dichtfläche angeordnete Dichtungselement aus PFTE vorgesehen ist.

Die BE-A-550 067 zeigt eine Schaltwellenabdichtung bei Armaturen mit einem Armaturengehäuse und einer sich durch das Gehäuse hindurch erstreckenden Schaltwelle, die im Gehäuse drehbar gelagert ist gegenüber dem Gehäuse abgedichtet ist, wobei als Abdichtung ein bezüglich des Gehäuses stationär angeordneter L-förmiger Ring vorgesehen ist, der einen O-Ring aufnimmt, der seinerseits am Gehäuse anliegt und gegenüber der Schaltwelle beabstandet ist.

Der Erfindung liegt die Aufgabe zugrunde, eine wartungsfreie Abdichtung zu schaffen, welche mit größter Sicherheit die erforderliche Dichtigkeit über eine sehr lange Betriebsdauer aufweist.

Zur Lösung dieser Aufgabe sind erfindungsgemäß die im Kennzeichen des Anspruchs 1 angegebenen Merkmale vorgesehen.

Durch die Erfindungsgemäße Merkmalskombination läßt sich ein Schaltwellen-Abdichtsystem erreichen, welches selbst den strengen Bestimmungen der TA Luft genügt. Die Hauptabdichtung erfolgt über ein dynamisches Dichtungselement in Form des Gleitrings, bei dem in Verbindung mit dem als statisches Dichtelement wirkenden O-Ring eine konstante Kraft gegen Schaltwelle und Gehäuse drückt. Ein wesentlicher Vorteil liegt hierbei darin, daß der O-Ring nur noch eine statische Funktion übernimmt, während der Gleitring mit seinen hervorragenden Gleiteigenschaften als dynamisches Dichtelement dient, so daß die Dichtfunktion des verwendeten O-Rings über lange Zeit voll erhalten bleibt, nachdem der O-Ring nicht in Berührung mit der sich drehenden Schaltwelle kommt. Voraussetzung für eine lange Lebensdauer bei voller Funktionsfähigkeit einer solchen Abdichtung ist allerdings eine exakte Führung der Schaltwelle, wozu erfindungsgemäß eine hochbelastbare Lagerfolie verwendet wird. Eine zusätzliche Sicherheit des Dichtsystems ergibt sich dadurch, daß erfindungsgemäß weiterhin eine Vorabdichtung vorgesehen ist, welche die eigentliche Stopfbuchse entlastet. Zu diesem Zweck ist die Schaltwelle in axialer Richtung zur Erzeugung einer zusätzlichen, der Abdichtung vorgeschalteten "Vorabdichtung" vorgespannt. Hierdurch wird gleichzeitig verhindert, daß beispielsweise bei Vakuumeinsatz oder durch eventuellen Druck oder Stöße auf die Schaltwelle diese nach unten wandert und das Medium an der Spindel hochsteigen könnte.

Wie bereits erwähnt, ist eine exakte Spindelführung Voraussetzung für einen wartungs- und störungsfreien Langzeitbetrieb bei hoher Schalthäufigkeit, wobei trotz auftretender Querkräfte, insbesondere bei der Handhebelbedienung, gewährleistet sein muß, daß diese nicht auf das System der Spindelabdichtung übertragen werden. Die erfindungsgemäß zu verwendenden Lagerfolien, die kommerziell erhältlich sind, genügen solchen Anforderungen in hohem Maße, insbesondere dann, wenn sie in bevorzugter Weiterbildung der Erfindung aus Metallgewebe und verschleißfestem PTFE bestehen. Ein aus einer solchen Lagerfolie aufgebautes Schaltwellenlager kann äußerst eng toleriert werden, was im vorliegenden Falle für die Funktionsfähigkeit der Abdichtung mitentscheidend ist.

In bevorzugter Weiterbildung der Erfindung ist vorgesehen, daß sich das Federelement gehäuseseitig an einer Lagerscheibe insbesondere aus PTFE abstützt, um die hier entstehenden Reibungskräfte beim Betätigen der Armatur zu minimieren.

Weitere vorteilhafte Merkmale der Erfindung ergeben sich aus den übrigen Unteransprüchen im Zusammenhang mit der nachfolgenden Beschreibung, in der ein bevorzugtes Ausführungsbeispiel der Erfindung anhand der Zeichnung näher erläutert wird. In der Zeichnung zeigen:
Figur 1 einen Schnitt durch eine erfindungsgemäße Schaltwellenabdichtung,
Figur 2 einen Schnitt durch die in Figur 1 verwendete Abdichtung im nicht eingebauten Zustand,
Figur 3 den Gleitring der Abdichtung gemäß Figur 2 und dessen Abmessungen, und
Figur 4 den O-Ring der Abdichtung gemäß Figur 2 und dessen Abmessungen.

Das erfindungsgemäße Abdichtsystem ist im folgenden anhand eines Kugelhahns beschrieben, einem der bevorzugten Anwendungsgebiete der Erfindung.

Der im übrigen nicht näher dargestellte Kugelhahn umfaßt ein Armaturengehäuse 2, eine im Gehäuse ausgebildete Durchgangsbohrung 4, eine sich durch die Durchgangsbohrung 4 hindurch erstreckende Schaltwelle 6, die in der weiter unten näher zu beschreibenden Weise in der Durchgangsbohrung gelagert ist und gegenüber dem Gehäuse abgedichtet ist, sowie die Kugel 8 eines Kugelhahns, die mittels der Schaltwelle 6 betätigbar ist, also z.B. um 90° drehbar ist. Hierzu greift ein am unteren Ende der Schaltwelle 6 ausgebildeter Zapfen 10 in eine entsprechende Ausnehmung 12 der Kugel 8 ein. Mit der Bezugsziffer 14 ist eine Vorrichtung zum Ableiten von elektrostatischen Ladungen skizziert.

Die Durchgangsbohrung 4 des Gehäuses 2 ist im Querschnitt insgesamt stufenförmig ausgebildet und umfaßt einen ersten Bohrungsabschnitt 16, einen zweiten, sich in Richtung Gehäuseinnerem anschließenden Bohrungsabschnitt 18 und einen dritten, sich an den ersten Bohrungsabschnitt in Richtung zum Gehäuseäußeren hin anschließenden Bohrungsabschnitt 20. Die Bohrungsabschnitte 16, 18 und 20 sind jeweils zylindrisch ausgebildet, wobei der erste Bohrungsabschnitt 16 einen Durchmesser aufweist, der geringfügig größer ist als der Durchmesser der Schaltwelle 6 und die zweiten und dritten Bohrungsabschnitte 18 und 20 Durchmesser aufweisen, die größer sind als der Durchmesser des ersten Bohrungsabschnitts. Der erste Bohrungsabschnitt 16 und der zweite Bohrungsabschnitt 18 sind miteinander über eine erste, sich radial erstreckende, kreisringförmige Dichtfläche 22 verbunden, während der erste Bohrungsabschnitt 16 und der dritte Bohrungsabschnitt 18 über eine dritte, sich radial erstreckende, kreisringförmige Dichtfläche 24 miteinander verbunden sind. Die zylindrische Wandung des dritten Bohrungsabschnitts 20 ist ebenfalls als Dichtfläche ausgebildet.

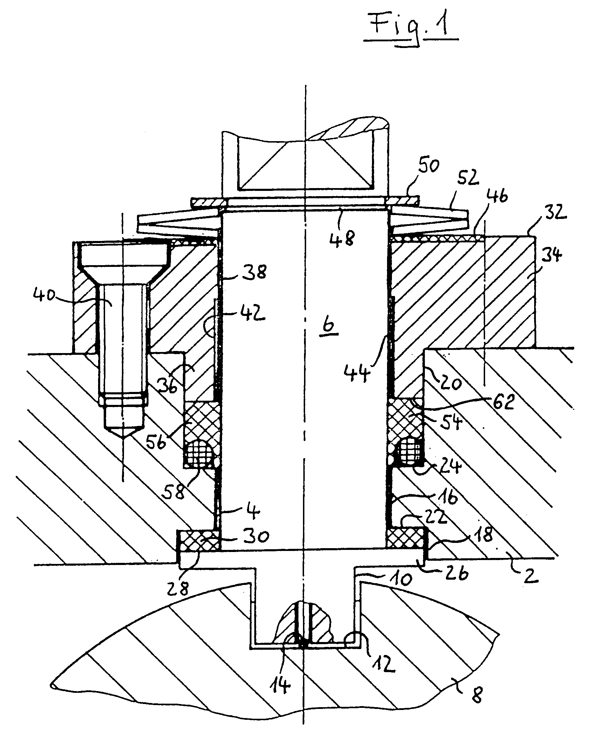

Zwischen dem mittleren, zylindrischen Abschnitt der Schaltwelle 6 und dem Zapfen 10 der Schaltwelle 6 ist ein radial vorspringender Flansch 26 an der Schaltwelle 6 angeformt, der eine zweite, sich radial nach außen erstreckende, kreisringförmige Dichtfläche 28 definiert, die der ersten kreisringförmigen Dichtfläche 22 gegenüberliegt. Der Durchmesser des Flansches 26, der sich teilweise in den zweiten Bohrungsabschnitt 18 hinein erstreckt, ist geringfügig kleiner als der Durchmesser dieses Bohrungsabschnitts. Zwischen der ersten kreisringförmigen Dichtfläche 22 und der zweiten kreisringförmigen Dichtfläche 28 ist eine Dichtscheibe 30 aus PTFE angeordnet, die aufgrund der weiter unten zu beschreibenden Vorspannung der Schaltwelle 6 in der Darstellung gemäß Figur 1 nach oben zusammen mit den entsprechenden Dichtflächen eine Vorabdichtung bildet und das Gehäuseinnere gegenüber der Schaltwelle und dem Äußeren abdichtet; gleichzeitig dient die Dichtscheibe 30 als Antifriktionsscheibe, um ein leicht gängiges Drehen der Schaltwelle 6 zu gewährleisten.

Eine im Bereich der Durchgangsbohrung 4 am Gehäuse 2 befestigte Aufbauplatte 32 umfaßt einen Flansch 34 mit einem hieran angeformten zylindrischen Abschnitt 36, wobei die Aufbauplatte 32 eine Durchgangsbohrung 38 aufweist, die konzentrisch zur Durchgangsbohrung 4 des Gehäuses angeordnet ist und durch die hindurch sich die Schaltwelle 6 erstreckt. Der zylindrische Abschnitt 36, dessen Außendurchmesser geringfügig kleiner ist als der Innendurchmesser des dritten Bohrungsabschnitts 20, ist in den dritten Bohrungsabschnitt 20 eingesetzt, während der Flansch 34 mittels Schrauben 40 randseitig am Gehäuse 2 festgeschraubt ist.

Die Aufbauplatte 32 weist eine innere zylindrische Ausnehmung 42 auf, deren Durchmesser etwas größer ist als der Durchmesser der Durchgangsbohrung 38 und deren axiale Länge sich über die axiale Länge des zylindrischen Abschnitts 36 und in etwa die Hälfte der axialen Länge des Flansches 34 erstreckt. In der zylindrischen Ausnehnung 42 ist als Lagerung für die Schaltwelle 6 eine Lagerfolie 44 angeordnet, die in der zylindrischen Ausnehmung 42 gehalten ist. Die Lagerfolie 44 ist wartungsfrei und hoch belastbar und besteht aus einer Werkstoffkombination aus Metallgewebe, das in eine besonders abriebfeste PTFE-Folie eingesintert ist. Solche Lagerfolien sind im Handel erhältlich, wobei sich insbesondere die Lagerfolie unter der Bezeichnung Pampus Metaloplast als besonders geeignet erwiesen hat. Die Verwendung einer geeigneten Lagerfolie als Lagerung für die Schaltwelle stellt einen wartungs- und störungsfreien Langzeitbetrieb bei hoher Schalthäufigkeit sicher und gewährleistet eine exakte Spindelführung, so daß trotz auftretender Querkräfte diese nicht auf die weiter unten zu beschreibende Abdichtung übertragen werden.

In eine entsprechende Vertiefung an der dem Gehäuse 2 abgewandten Oberseite der Aufbauplatte 32 ist eine Lagerfolie 46 eingelegt. In einer Umfangsnut 48 der Schaltwelle 6, die außerhalb des Gehäuses 2 angeordnet ist, ist ein Sicherungsring 50 angeordnet. Eine Tellerfeder 52 ist auf die Schaltwelle 6 aufgeschoben und befindet sich zwischen Sicherungsring 50 und Lagerfolie 46 und drückt über den Sicherungsring 50 und die Umfangsnut 48 die Schaltwelle in Richtung nach außen, so daß die Dichtflächen 22 und 28 unter Zwischenschaltung der Dichtscheibe 30 sicher gegeneinander gedrückt werden. Die Gleiteigenschaften der Lagerfolie 46 reduziert die Reibung zwischen der Tellerfeder 52 und dem Gehäuse bzw. der Aufbauplatte 32.

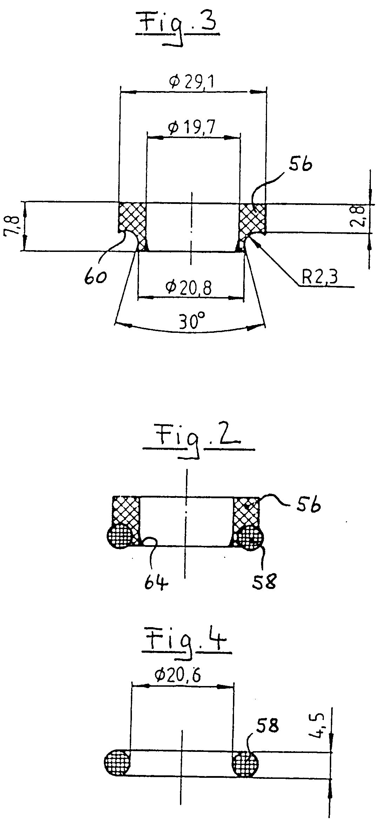

Die primäre Abdichtung des Systems erfolgt über die stopfbuchsartige Abdichtung 54, die sich aus einem Gleitring 56 aus karbonverstärktem PTFE und einem Elastomer-O-Ring 58 zusammensetzt. Der Gleitring 56 ist, wie sich aus den Figuren 1 bis 3 ergibt, im axialen Querschnitt im wesentlichen rechteckförmig und weist an seinem einen, in der gewählten Darstellung unteren äußeren Randbereich eine Auskehlung 60 auf, die zur Aufnahme des O-Rings 58 dient. Im nicht eingebauten, d.h. entspannten Zustand der Abdichtung 54, wie er in den Figuren 2 bis 4 gezeigt ist, ragt der in die Auskehlung 60 eingesetzte O-Ring seitlich und unten über die entsprechenden Begrenzungsflächen des Gleitrings 56 vor. Die für den vorliegenden Fall gewählten Abmessungen des Gleitrings 56 und des O-Rings 58 sind in den Figuren 3 und 4 in mm angegeben.

Der Gleitring 56 weist im entspannten Zustand an seiner Innenseite einen sich radial nach innen erstreckenden, ringförmigen Vorsprung 64 auf, und zwar an dem der Auskehlung 60 gegenüberliegenden Bereich. Der Vorsprung ist in Figur 2 zur Verdeutlichung stark überhöht dargestellt. Aufgrund des Vorsprungs 64 ergibt sich zwischen Gleitring und Schaltwelle im wesentlichen ein Linienkontakt, wodurch die Reibung und der Verschleiß reduziert werden.

Die aus Gleitring 56 und O-Ring 58 bestehende Abdichtung 54 ist, wie aus Figur 1 ersichtlich, in den zwischen der dritten kreisringförmigen Dichtfläche 24, der Schaltwelle 6, dem dritten Bohrungsabschnitt 20 und der unteren, radial verlaufenden, kreisringförmigen Stirnfläche 62 des zylindrischen Abschnitts 36 der Aufbauplatte 32 definierten Raum eingesetzt. Die Anordnung hierbei ist derart, daß der O-Ring 58 die dritte kreisringförmige Dichtfläche 24 und den dritten Bohrungsabschnitt 20 kontaktiert, nicht jedoch die Schaltwelle 6. Der Gleitring 56 liegt dichtend an der Schaltwelle 6 an, des weiteren liegt er an der Stirnfläche 62, am dritten Bohrungsabschnitt 20 und ggf. an der dritten kreisringförmigen Dichtfläche 24 an. Der O-Ring 24 übernimmt die statische Abdichtung, während der Gleitring 56, der hervorragende Gleiteigenschaften aufweist, als dynamisches Dichtelement dient.

### Bezugszeichenliste

- 2: Gehäuse
- 4: Durchgangsbohrung
- 6: Schaltwelle
- 8: Kugel
- 10: Zapfen
- 12: Ausnehmung
- 14: Vorrichtung zum Ableiten von elektr. Ladungen
- 16: erster Bohrungsabschnitt
- 18: zweiter Bohrungsabschnitt
- 20: dritter Bohrungsabschnitt
- 22: erste kreisförmige Dichtfläche
- 24: dritte kreisförmige Dichtfläche
- 26: Flansch
- 28: zweite kreisförmige Dichtfläche
- 30: Dichtscheibe
- 32: Aufbauplatte
- 34: Flansch
- 36: zylindrischer Abschnitt
- 38: Durchgangsbohrung
- 40: Schrauben
- 42: zylindrische Ausnehmung
- 44: Lagerfolie
- 46: Lagerfolie
- 48: Umfangsnut
- 50: Sicherungsring
- 52: Tellerfeder
- 54: Abdichtung
- 56: Gleitring
- 58: O-Ring
- 60: Auskehlung
- 62: Stirnfläche
- 64: Vorsprung

## Patentansprüche

1. Schaltwellenabdichtung bei Armaturen mit einem Armaturengehäuse (2) und einer sich durch das Gehäuse hindurch erstreckenden Schaltwelle (6), die im Gehäuse drehbar gelagert ist und gegenüber dem Gehäuse abgedichtet ist, wobei zwischen einer sich bezüglich der Schaltwellenachse im wesentlichen radial erstreckenden gehäuseseitigen Dichtfläche (22) und einer dieser gehäuseseitigen Dichtfläche (22) gegenüberliegenden, sich ebenfalls im wesentlichen radial erstreckenden schaltwellenseitigen Dichtfläche (28) ein Dichtungselement (30) angeordnet ist und die Schaltwelle (6) durch mindestens ein zwischen Schaltwelle und Gehäuse (2) wirkendes Federelement (52) in axialer Richtung vorgespannt ist derart, daß die gehäuseseitige Dichtfläche (22) und die schaltwellenseitige Dichtfläche (28) aufeinanderzu vorgespannt sind, gekennzeichnet durch folgende Merkmale:
a) als Abdichtung (54) ist ein bezüglich des Gehäuses (2) stationär angeordneter Gleitring (56) vorgesehen, der eine umlaufende Auskehlung (60) aufweist, die einen O-Ring (58) aufnimmt, der seinerseits am Gehäuse anliegt und gegenüber der Schaltwelle beabstandet ist;
b) das Lager der Schaltwelle (6) ist als hochbelastbare Lagerfolie (44) ausgebildet.

2. Schaltwellenabdichtung nach Anspruch 1,
dadurch gekennzeichnet,
daß die Lagerfolie (44) aus Metallgewebe und verschleißfestem PTFE besteht.

3. Schaltwellenabdichtung nach Anspruch 1 oder 2,
dadurch gekennzeichnet,
daß der Gleitring (56) aus karbonverstärktem PTFE besteht.

4. Schaltwellenabdichtung nach einem der vorhergehenden Ansprüche,
dadurch gekennzeichnet,
daß die Auskehlung (60) an einer äußeren Kante des Gleitrings (56) ausgebildet ist derart, daß der O-Ring (58) sowohl eine radiale Dichtungsfläche (24) des Gehäuses (2) als auch eine hierzu rechtwinklig verlaufende, zylindrische Dichtungsfläche (20) des Gehäuses (2) kontaktiert.

5. Schaltwellenabdichtung nach einem der vorhergehenden Ansprüche,
dadurch gekennzeichnet,
daß das mindestens eine Federelement (52) an der Gehäuseaußenseite angeordnet ist und die Schaltwelle (6) bezüglich des Gehäuses (2) nach außen zieht und daß die gehäuseseitige Dichtfläche (22) an der Gehäuseinnenseite angeordnet ist.

6. Schaltwellenabdichtung nach einem der vorhergehenden Ansprüche,
dadurch gekennzeichnet,
daß das Dichtungselement (30) eine PTFE-Scheibe ist.

7. Schaltwellenabdichtung nach einem der vorhergehenden Ansprüche,
dadurch gekennzeichnet,
daß das Federelement (52) mindestens eine Tellerfeder ist.

8. Schaltwellenabdichtung nach einem der vorhergehenden Ansprüche,
dadurch gekennzeichnet,
daß sich das Federelement (52) gehäuseseitig auf einer Lagerfolie (46) abstützt.

9. Schaltwellenabdichtung nach einem der vorhergehenden Ansprüche,
gekennzeichnet durch folgenden Aufbau:
- eine Durchgangsbohrung (4) im Gehäuse (2), in der die Schaltwelle (6) angeordnet ist,
- mit einem ersten Bohrungsabschnitt (16), dessen Durchmesser etwas größer als der Durchmesser der Schaltwelle (6) ist,
- mit einem zweiten Bohrungsabschnitt (18), der sich in Richtung zum Gehäuseinneren an den ersten Bohrungsabschnitt (16) anschließt und einen größeren Durchmesser hat als der erste Bohrungsabschnitt,
- mit einer zwischen dem ersten und dem zweiten Bohrungsabschnitt ausgebildeten ersten kreisringförmigen Dichtfläche (22), welche die gehäuseseitige Dichtfläche darstellt,
- an der Schaltwelle (6) ist eine zweite kreisringförmige Dichtfläche (28) angeordnet, die unter Zwischenlage einer Dichtscheibe (30) der gehäuseseitigen Dichtfläche (22) gegenüberliegt,
- ein dritter Bohrungsabschnitt (20) schließt sich in Richtung zum Gehäuseäußeren an den ersten Bohrungsabschnitt (16) an und weist einen größeren Durchmesser auf als der erste Bohrungsabschnitt,
- eine zwischen erstem und drittem Bohrungsabschnitt (16 bzw. 20) ausgebildete, sich radial erstreckende dritte kreisringförmige Dichtfläche (24),
- die Abdichtung (54), die im dritten Bohrungsabschnitt (20) angeordnet ist, liegt innen an der Schaltwelle (6), außen an der zylindrischen Wandung des dritten Bohrungsabschnitts (20) und an ihrer einen Stirnseite an der dritten kreisringförmigen Dichtfläche (24) dichtend an, wobei der in der Auskehlung (60) des Gleitrings (56) der Abdichtung (54) angeordnete O-Ring (58) sowohl an der zylindrischen Wandung des dritten Bohrungsabschnitts (20) als auch an der dritten kreisringförmigen Dichtfläche (24) anliegt,
- eine Aufbauplatte (32) weist einen gegenüber dem Durchmesser des dritten Bohrungsabschnitts (20) vergrößerten außenliegenden Flansch (34) auf, über den sie von außen mit dem Gehäuse (2) verbunden ist, und der zur Zentrierung von Aufbauteilen dient,
- eine Durchgangsbohrung (38) in der Aufbauplatte (32) fluchtet mit der Durchgangsbohrung (4) im Gehäuse (2) und nimmt die Schaltwelle (6) auf,
- ein sich in den dritten Bohrungsabschnitt (20) hineinerstreckender zylindrischer Abschnitt (36) der Aufbauplatte (32) liegt mit seiner ringförmigen, radial verlaufenden Stirnfläche (62) an der anderen Stirnseite der Abdichtung (54) an,
- in einer zylindrischen, mit der Achse der Durchgangsbohrung (38) der Aufbauplatte (32) konzentrischen Ausnehmung (42) in der Durchgangsbohrung (38) der Aufbauplatte (32) ist die Lagerfolie (44) angeordnet,
- auf der Oberseite der Aufbauplatte (32) ist eine Lagerfolie (46) angeordnet,
- ein an der Schaltwelle (6) befestigter, mit der Schaltwelle konzentrischer Sicherungsring (50) ist von der Lagerfolie (46) nach außen beabstandet, und
- eine Tellerfeder (52) ist zwischen Lagerfolie (46) und Sicherungsring (50) gespannt.

10. Schaltwellenabdichtung nach einem der vorhergehenden Ansprüche,
dadurch gekennzeichnet,
daß der Gleitring (56) im entspannten Zustand an seiner Innenseite einen sich radial nach innen erstreckenden ringförmigen Vorsprung (64) aufweist.

## Claims

1. Operating shaft seal for fittings having a fittings housing (2) and an operating shaft (6) which extends through the housing, is rotatably supported in the housing and is sealed off from the housing, a sealing element (30) being disposed between a housing-side sealing surface (22), which extends substantially radially relative to the operating shaft axis, and a likewise substantially radially extending operating-shaft-side sealing surface (28) lying opposite said housing-side sealing surface (22), and the operating shaft (6) being preloaded in an axial direction by at least one spring element (52) acting between operating shaft and housing (2) in such a way that the housing-side sealing surface (22) and the operating-shaft-side sealing surface (28) are preloaded towards one another, characterized by the following features:
a) as a seal (54), a bearing ring (56) is provided which is disposed in a stationary manner relative to the housing (2) and has a circumferential groove (60) for receiving an O-ring (58), which in turn lies adjacent to the housing and is spaced apart from the operating shaft;
b) the bearing of the operating shaft (6) takes the form of a bearing foil (44) with a high loading capacity.

2. Operating shaft seal according to claim 1,
characterized in that
the bearing foil (44) is made of metallic cloth and wear-resistant PTFE.

3. Operating shaft seal according to claim 1 or 2,
characterized in that
the bearing ring (56) is made of carbon-reinforced PTFE.

4. Operating shaft seal according to one of the preceding claims,
characterized in that
the groove (60) is constructed at an outer edge of the bearing ring (56) in such a way that the O-ring (58) contacts both a radial sealing surface (24) of the housing (2) and a cylindrical sealing surface (20) of the housing (2) extending at right angles thereto.

5. Operating shaft seal according to one of the preceding claims,
characterized in that
the at least one spring element (52) is disposed on the outside of the housing and the operating shaft (6) travels outwards relative to the housing (2) and that the housing-side sealing surface (22) is disposed on the inside of the housing.

6. Operating shaft seal according to one of the preceding claims,
characterized in that
the sealing element (30) is a PTFE washer.

7. Operating shaft seal according to one of the preceding claims,
characterized in that
the spring element (52) is at least one cup spring.

8. Operating shaft seal according to one of the preceding claims,
characterized in that
the spring element (52) is supported at the housing side on a bearing foil (46).

9. Operating shaft seal according to one of the preceding claims,
characterized by the following structure:
- a through bore (4) in the housing (2), in which bore the operating shaft (6) is disposed,
- having a first bore portion (16), whose diameter is slightly greater than the diameter of the operating shaft (6),
- having a second bore portion (18) which towards the housing interior adjoins the first bore portion (16) and has a greater diameter than the first bore portion,
- having a first annular sealing surface (22) formed between the first and the second bore portion and representing the housing-side sealing surface,
- disposed on the operating shaft (6) is a second annular sealing surface (28) which, with the insertion of a sealing washer (30), lies opposite the housing-side sealing surface (22),
- a third bore portion (20) towards the housing exterior adjoins the first bore portion (16) and has a greater diameter than the first bore portion,
- a radially extending, third annular sealing surface (24) constructed between the first and third bore portions (16 and 20),
- the seal (54), which is disposed in the third bore portion (20), lies in a sealing manner internally adjacent to the operating shaft (6), externally adjacent to the cylindrical wall of the third bore portion (20) and at its one face adjacent to the third annular sealing surface (24), the O-ring (58) disposed in the groove (60) of the bearing ring (56) of the seal (54) lying adjacent both to the cylindrical wall of the third bore portion (20) and to the third annular sealing surface (24),
- a mounting plate (32) has a - compared to the diameter of the third bore portion (20) - enlarged external flange (34), via which said mounting plate is connected from outside to the housing (2) and which is used to centre assembly parts,
- a through bore (38) in the mounting plate (32) is aligned with the through bore (4) in the housing (2) and receives the operating shaft (6),
- a cylindrical portion (36) of the mounting plate (32), which extends into the third bore portion (20), lies with its annular, radially extending end face (62) adjacent to the other face of the seal (54),
- the bearing foil (44) is disposed in a cylindrical recess (42) in the through bore (38) of the mounting plate (32), said recess being concentric with the axis of the through bore (38) of the mounting plate (32),
- a bearing foil (46) is disposed on the top of the mounting plate (32),
- a retaining ring (50), which is fastened to the operating shaft (6) and concentric with the operating shaft, is spaced apart in an outward direction from the bearing foil (46), and
- a cup spring (52) is stretched between bearing foil (46) and retaining ring (50).

10. Operating shaft seal according to one of the preceding claims,
characterized in that
the bearing ring (56) in the relaxed state has, at its inside, a radially inwardly extending, annular projection (64).

## Revendications

1. Etanchement d'arbre de commande pour armatures avec un boîtier d'armature (2) et un arbre de commande (6) qui traverse le boîtier, ledit arbre étant monté mobile en rotation dans un palier dans le boîtier et rendu étanche par rapport au boîtier, dans lequel entre une surface d'étanchéité (22), s'étendant suivant une direction sensiblement radiale par rapport à l'axe de l'arbre de commande, du côté du boîtier, et une surface d'étanchéité (28) s'étendant aussi suivant une direction sensiblement radiale du côté de l'arbre de commande et faisant face à ladite surface d'étanchéité (22) située du côté du boîtier, se trouve un élément d'étanchéité (30) et, l'arbre de commande (6) est précontraint en direction axiale par au moins un élément à ressort (52) qui se trouve entre l'arbre de commande et le boîtier (2) de manière que la surface d'étanchéité (22) du côté du boîtier et la surface d'étanchéité (28) du côté de l'arbre de commande, soient mise en précontrainte l'une sur l'autre, caractérisé en ce que :
a) - il est prévu comme élément d'étanchéité (54) un anneau coulissant (56), positionné de façon fixe par rapport au boîtier (2), ledit anneau présentant une gorge circulaire (60) dans laquelle est logé un joint torique (58) qui, de son côté, est ajusté au boîtier et présente un jeu par rapport à l'arbre de commande ;
b) - le palier de l'arbre de commande (6) est formé par une feuille de garniture de palier (44) pouvant supporter une charge élevée.

2. Etanchement d'arbre de commande selon la revendication 1, caractérisé en ce que la feuille de garniture de palier (44) est constituée par une toile métallique et du PTFE (Polytétrafluoroéthylène) résistant à l'usure.

3. Etanchement d'arbre de commande selon la revendication 1 ou 2, caractérisé en ce que l'anneau coulissant (56) est constitué de PTFE renforcé au carbone.

4. Etanchement d'arbre de commande selon l'une quelconque des revendications précédentes, caractérisé en ce que la gorge circulaire (60) est formée sur le bord extérieur de l'anneau coulissant (56), que le joint torique (58) est en contact, à la fois, avec une surface d'étanchéité radiale (24) du boîtier (2) et avec une surface d'étanchéité cylindrique (20) du boîtier (2), qui y est perpendiculaire.

5. Etanchement d'arbre de commande selon l'une quelconque des revendications précédentes, caractérisé en ce qu'au moins un élément à ressort (52) est positionné du côté du boîtier (2), et exerce sur l'arbre de commande (6) une traction vers l'extérieur par rapport au boîtier (2), et que la surface d'étanchéité (22) du côté du boîtier est positionnée sur le côté intérieur du boîtier.

6. Etanchement d'arbre de commande selon l'une quelconque des revendications précédentes, caractérisé en ce que l'élément d'étanchéité (30) est une rondelle en PTFE.

7. Etanchement d'arbre de commande selon l'une quelconque des revendications précédentes, caractérisé en ce que l'élément à ressort (52) est au moins un ressort Belleville.

8. Etanchement d'arbre de commande selon l'une quelconque des revendications précédentes, caractérisé en ce que l'élément à ressort (52) s'appuie sur une feuille de garniture de palier (46) du côté du boîtier.

9. Etanchement d'un arbre de commande selon l'une quelconque des revendications précédentes, caractérisé par :
- un perçage (4) traversant le boîtier (2) dans lequel l'arbre de commande (6) est disposé,
- avec un premier tronçon de perçage (16), dont le diamètre est un peu plus grand que le diamètre de l'arbre de commande (6),
- avec un deuxième tronçon de perçage (18) qui fait suite au premier tronçon de perçage (16) en direction de l'intérieur du boîtier et qui a un diamètre plus grand que le premier tronçon de perçage,
- avec une première surface d'étanchéité annulaire (22), située entre le premier et le deuxième tronçons de perçage, et qui constitue la surface d'étanchéité du côté du boîtier,
- agencée sur l'arbre de commande (6), une seconde surface d'étanchéité annulaire (28) qui fait face à la surface d'étanchéité (22) située du côté du boîtier, entre elles se trouvant une rondelle d'étanchéité (30),
- un troisième tronçon de perçage (20) faisant suite, vers l'extérieur du boîtier, au premier tronçon de perçage (16) et présentant un diamètre plus grand que celui du premier tronçon de perçage,
- une troisième surface d'étanchéité annulaire (24) qui s'étend radialement entre le premier et le troisième tronçons de perçage (16, respectivement 20),
- le fait que l'élément d'étanchéité (54), qui est disposé dans le troisième tronçon de perçage (20), est en contact étanche à l'intérieur avec l'arbre de commande (6), à l'extérieur avec la paroi cylindrique du troisième tronçon de perçage (20) et, par l'une de ses faces frontales avec la troisième surface d'étanchéité annulaire (24), ce par quoi le joint d'étanchéité torique (58) situé dans la gorge circulaire (60) de l'anneau coulissant (56) de l'élément d'étanchéité (54) est en contact, à la fois, avec la paroi cylindrique du troisième tronçon de perçage (20) et la troisième surface d'étanchéité annulaire (24),
- une plaque de montage (32) présentant une bride extérieure (34) agrandie par rapport au diamètre du troisième élément de perçage (20), bride par laquelle ladite plaque est fixée par l'extérieur au boîtier (2) et qui sert au centrage des éléments du montage,
- un perçage traversant (38) dans la plaque de montage (32) aligné avec le perçage traversant (4) dans le boîtier (2) et recevant l'arbre de commande (6),
- un tronçon cylindrique (36) de la plaque de montage (32) s'introduisant dans le troisième tronçon de perçage (20) de la plaque de montage, ledit tronçon reposant avec sa surface frontale (62), s'étendant radialement et de forme annulaire, sur l'autre surface frontale de l'élément d'étanchéité (54),
- le fait que la feuille de garniture de palier (44) est positionnée concentriquement avec l'axe du perçage traversant (38) de la plaque de montage (32), dans un alésage cylindrique (42) pratiqué dans le perçage traversant (38) de la plaque de montage (32),
- une feuille de garniture de palier (46), placée sur la face supérieure de la plaque de montage (32),
- une rondelle de sécurité (50), montée sur l'arbre de commande (6), concentrique avec l'arbre de commande, présentant un jeu vers l'extérieur par rapport à la feuille de garniture de palier (46), et
- un ressort Belleville (52) mis sous contrainte entre la feuille de garniture de palier (46) et la rondelle de sécurité (50).

10. Etanchement d'arbre de commande selon l'une quelconque des revendications précédentes, caractérisé en ce que l'anneau coulissant (56) présente sur son côté intérieur, dans son état détendu, une saillie annulaire (64) qui s'étend radialement vers l' intérieur.
